# EUROPEAN PATENT SPECIFICATION

(11) **EP 4 285 296 B1**
(45) Date of publication and mention of the grant of the patent: **26.03.2025**
(21) Application number: 22705707.2
(22) Date of filing: 01.02.2022
(51) Int. Cl.: H04L 9/40, G06N 20/00

(54) **SYSTEMS AND METHODS FOR FEDERATED LEARNING USING PEER-TO-PEER NETWORKS**
SYSTEME UND VERFAHREN FÜR FÖDERIERTES LERNEN UNTER VERWENDUNG VON PEER-TO-PEER-NETZWERKEN
SYSTÈMES ET PROCÉDÉS D'APPRENTISSAGE FÉDÉRÉ AU MOYEN DE RÉSEAUX POSTE À POSTE

(30) Priority: 01.02.2021 IN 202111004346; 31.01.2022 US 202217649471
(43) Date of publication of application: 06.12.2023
(73) Proprietor: JPMorgan Chase Bank, N.A., New York, NY 10179 (US)
(72) Inventor: BEHERA, Monik Raj, New York, NY 10179 (US); UPADHYAY, Sudhir, New York, NY 10179 (US); OTTER, Rob, New York, NY 10179 (US); SHETTY, Suresh, New York, NY 10179 (US)
(74) Representative: Patentanwälte Olbricht Buchhold Keulertz
(86) International application number: PCT/US2022/070455
(87) International publication number: WO 2022/165535

(56) References cited:
- CN-A- 105 610 854
- US-A1- 2019 332 955
- US-A1- 2020 272 945

## Description

### BACKGROUND OF THE INVENTION

### 1. Field of the Invention

Embodiments generally relate to systems and methods for federated learning using peer-to-peer networks.

### 2. Description of the Related Art

In the era of distributed computing, scale of data and computational resources are often handled by distribution of workloads across multiple systems in horizontal direction. Distributed computing, and in particular distributed machine learning, opens many exciting opportunities. It also introduces new challenges in areas where data privacy and data security are important. Designing a resilient, highly available, and robust ecosystem for machine learning is equally challenging. Federated learning lays the foundation for implementing machine learning on a distributed landscape where heterogeneous machines can participate in collaborative manner.

Federated learning generally involves an "aggregator node" and set of "participant nodes" in a federated network. Current available implementations have a centralized design of an aggregator node and various participant nodes, and they form a star topology for communication. The participant nodes send their local model gradients to the aggregator node, and the aggregator node composes all the received models together into a singular global model. This singular global model is then sent back to all participant nodes. In this setup, the participants benefit from common learning, without knowing about all the underlying data.

While federated learning does take care of privacy, security, and anonymity, aggregator nodes become the single point of failure in the federated network. This poses a risk of downtime in case of unwanted failures, which may lead to the stoppage of critical process on the network. US2020/272945Al, US2019/332955A1 and CN105610854B constitute relevant prior art which has been considered to examine the corresponding European Patent application from which this European Patent is issued.

### SUMMARY OF THE INVENTION

Systems and methods for federated learning using peer-to-peer networks are disclosed. According to an embodiment, a method for federated learning using peer-to-peer networks may include: (1) electing, by a plurality of participant nodes in a peer-to-peer network, one of the participant nodes as a collaborator node using a consensus algorithm; (2) generating, by the collaborator node, a collaborator node public key and a collaborator node private key; (3) broadcasting, by the collaborator node and to the plurality of participant nodes, the collaborator node public key; (4) generating, by each participant node, a participant node public key and a participant node private key, wherein each participant node generates a new participant node public key and a new participant node private key for each communication with the collaborator node; (5) encrypting, by each participant node, a message comprising a parameter for a local machine learning model for the participant node and the participant node public key with the collaborator node public key; (6) broadcasting, by each participant node, the encrypted message on the peer-to-peer network; (7) decrypting, by the collaborator node, each of the encrypted messages with the collaborator node private key; (8) updating, by the collaborator node, an aggregated machine learning model with the decrypted parameters for the local machine learning models; (9) encrypting, by the collaborator node, a plurality of update messages each comprising an update from the aggregated machine learning model with each participant node's public key; (10) broadcasting, by the collaborator node, the plurality of messages on the peer-to-peer network; (11) decrypting, by each of the participant nodes, one of the plurality of messages with the participant node private key for the participant node; and (12) updating, by each of the participant nodes, the local machine learning model for the participant node with the update.

In one embodiment, the consensus algorithm may be the Raft consensus algorithm.

In one embodiment, the parameter may include information related to model exchange, local machine learning model weights, and/or the local machine learning model.

In one embodiment, the parameter may include clear data and/or synthetic data.

In one embodiment, the collaborator node may perform model aggregation using the decrypted parameters.

In one embodiment, the collaborator node may train the aggregated machine learning model using the decrypted parameters.

In one embodiment, the participant node is the collaborator node for a limited period.

In one embodiment, the collaborator node may broadcast a heartbeat to the participant nodes.

In one embodiment, the participant nodes may elect a new collaborator node in response to the collaborator node being inactive.

According to another embodiment, a system may include a plurality of participant nodes, each participant node associated with a local machine learning model and a peer-to-peer network connecting the plurality of participant nodes. The plurality of participant nodes may elect one of the plurality of participant nodes as a collaborator node using a consensus algorithm; the collaborator node may generate a collaborator node public key and a collaborator node private key and may broadcast the collaborator node public key to the plurality of participant nodes; each participant node may generate a participant node public key and a participant node private key, wherein each participant node generates a new participant node public key and a new participant node private key for each communication with the collaborator node, may encrypt a message comprising a parameter for a local machine learning model for the participant node and the participant node public key with the collaborator node public key, and may broadcast the encrypted message on the peer-to-peer network; the collaborator node may decrypt each of the encrypted messages with the collaborator node private key, may update an aggregated machine learning model with the decrypted parameters for the local machine learning models, may encrypt a plurality of update messages each comprising an update from the aggregated machine learning model with each participant node's public key, and may broadcast the plurality of messages on the peer-to-peer network; each of the participant nodes may decrypt one of the plurality of messages with its participant node private key for the participant node and may update its local machine learning model with the update.

In one embodiment, the consensus algorithm is the Raft consensus algorithm.

In one embodiment, the parameter may include information related to model exchange, local machine learning model weights, and/or the local machine learning model.

In one embodiment, the parameter may include clear data and/or synthetic data.

In one embodiment, the collaborator node may perform model aggregation using the decrypted parameters.

In one embodiment, the collaborator node may train the aggregated machine learning model using the decrypted parameters.

In one embodiment, the participant node may be the collaborator node for a limited period.

In one embodiment, the collaborator node may broadcast a heartbeat to the participant nodes.

In one embodiment, the participant nodes may elect a new collaborator node in response to the collaborator node being inactive.

### BRIEF DESCRIPTION OF THE DRAWINGS

For a more complete understanding of the present invention, the objects and advantages thereof, reference is now made to the following descriptions taken in connection with the accompanying drawings in which:
Figure 1 depicts a system for federated learning using peer-to-peer networks according an embodiment;
Figure 2 depicts a method for federated learning using peer-to-peer networks according an embodiment;
Figure 3 depicts a state diagram for participant nodes in a peer-to-peer network according to an embodiment.

### DETAILED DESCRIPTION OF PREFERRED EMBODIMENTS

Embodiments are directed to systems and methods for federated learning using peer-to-peer network for decentralized orchestration of model weights.

Embodiments are generally directed to a resilient and highly available aggregator service through decentralization with federated learning using peer-to-peer communication among the participant nodes in a federated network. All of the participant nodes may have equivalent capabilities on the network, and all may be able to communicate with each other. At any given point of time, the network may have only one of the participant nodes acting as a "leader" (or collaborator node) while the rest of the participant nodes act as "follower nodes." In case the leader node becomes unavailable or unresponsive (e.g., it crashes), the network conducts a new leader election to select a leader node among the remaining participant nodes. This may follow a Raft consensus algorithm to conduct election and assign leaders.

The leader node may be responsible for acting as transient aggregator for the network. In embodiments, to distribute the workload among the participant nodes, and give a fair chance to every participant node within the network to assume the role of the "leader node," a new leader node may be elected after a predefined time interval is elapsed.

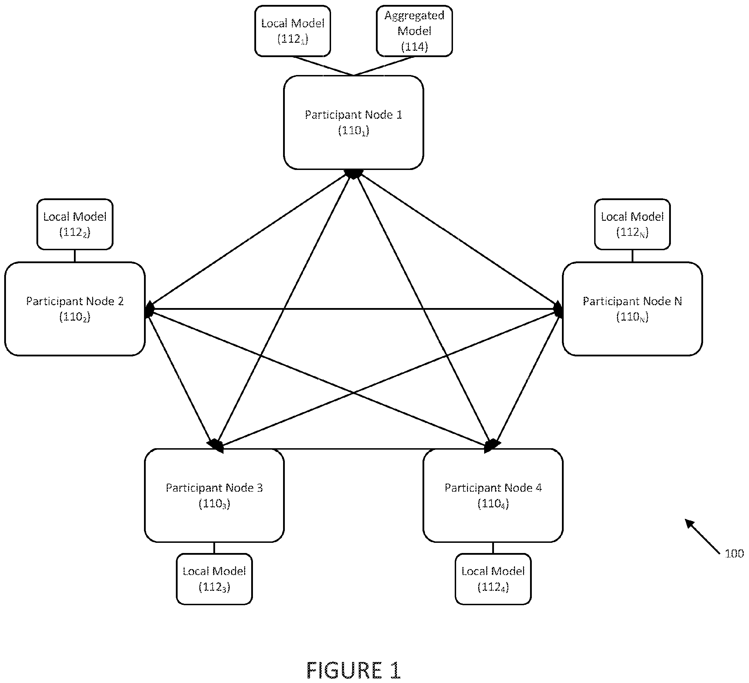

Referring to Figure 1, a system for federated learning using peer-to-peer network is disclosed according to an embodiment. System 100 may include a plurality of participant nodes 110 (e.g., 110₁, 110₂, 110₃, ... 110_{N}) in a peer-to-peer network, where each participant node 110 may communicate directly with each of the other participant nodes 110. Each participant node 110 may maintain local model 112 (e.g., 112₁, 112₂, 112₃, ... 112_{N}), and one of the participant nodes (e.g., participant 110₁,) may be elected to be a leader node (or collaborator node) may generate aggregated model 114 for the participant nodes in the federated network.

Each node may execute a computer program, application, script, etc. (not shown) that may control operations of the respective node.

Each participant node 110 may participate as a leader node (collaborator node), a follower node, or a candidate node. To facilitate the communication between participant nodes 110, system 100 provides peer-to-peer communication between participant nodes 110. The communications may be facilitated by making remote procedure calls using a TCP layer of networking.

Because the network is a peer-to-peer network, all messages are broadcast to the network. Based on the message type, if encrypted, only the valid recipient can read the message. If the message is not encrypted, all recipients may read the message and take necessary actions.

As in any peer-to-peer network, all of the participant nodes 110 need to be aware of all the participant nodes 110 present in the network, along with firewalls open for seamless TCP based communication. The RSA public and private keys involved in encryption are dynamic due to the transient nature of the leader. For example, the pair of RSA keys may be rotated with every message, initiated by one of the participant nodes.

In case of completion of election, the leader node announces its RSA public key to the network, so that it can be used by the participant nodes to send messages, such as local machine learning model parameters, to the leader node.

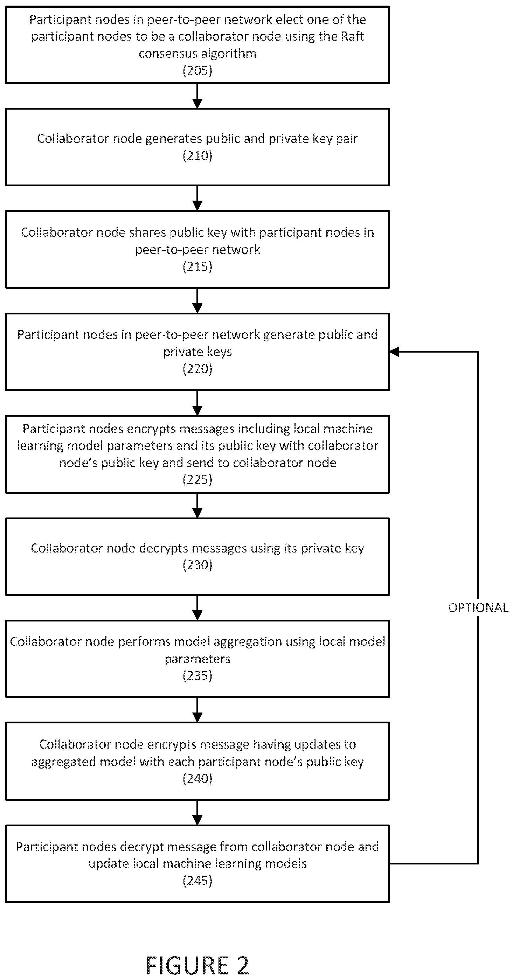

Referring to Figure 2, a method for federated learning using peer-to-peer networks is disclosed according to an embodiment.

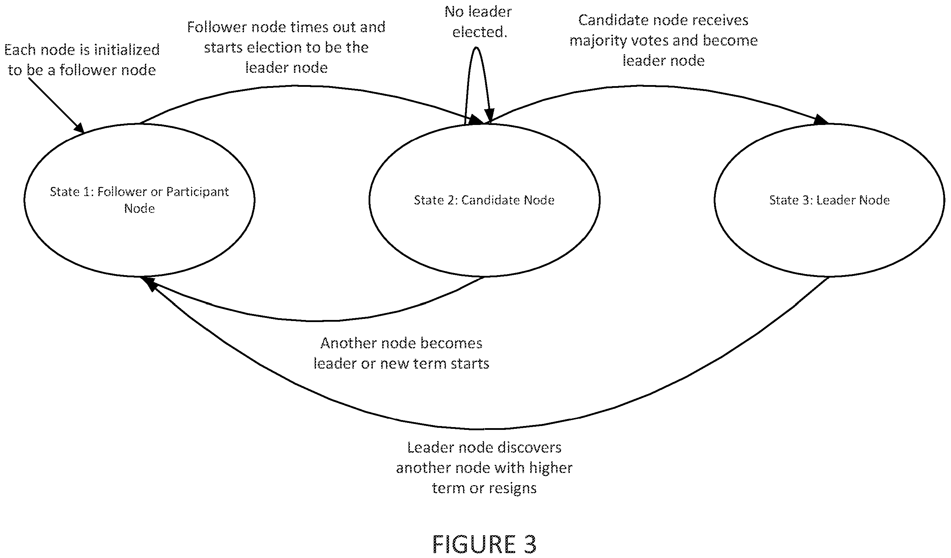

In step 205, the participant nodes in peer-to-peer network may elect one of the participant nodes to be a leader node, or collaborator node, using, for example, the Raft consensus algorithm. An example state diagram for each participant node based on the Raft consensus algorithm is provided in Figure 3.

Figure 3 depicts a state diagram for participant nodes according to an embodiment. Figure 3 depicts three states for each node in the peer-to-peer network: State 1, where the node is a follower, or participant, node; State 2, where the node is a candidate node; and State 3, wherein the node is a leader, or collaborator, node.

Each node may be initialized to be a follower or participant node (State 1). From State 1, the follower node may initiate an election to be a leader node, thereby becoming a candidate node (State 2). In State 2, the node may become a leader node (State 3), no leader may be elected and it may remain a candidate node for another election (State 2), or another node may be elected to be a leader, and the node may return to being a follower, or participant, node (State 1). In State 3, if the node identifies a node with a higher priority, or resigns, the node may return to being a follower, or participant, node (State 1).

The nodes may use the Raft consensus algorithm to elect a leader node (State 3). State 3 is designed to be transient. If there are no failures, the elected node stays as leader node for a period T, which may be defined by, for example, a network administrator. After the period T is elapsed, the leader node resigns, becomes a follower node (State 1), thereby indirectly initiating an election.

An example of the Raft consensus algorithm is provided in Ongaro, et al. "In search of an understandable consensus algorithm." In Proceedings of the 2014 USENIX Conference on USENIX Annual Technical Conference (USENIX ATC '14), Gibson, G. and Zeldovich (Eds.): 305-329.

In embodiments, all the participant nodes may expect a heartbeat from the leader node (e.g., every 5 seconds) to ensure the leader node is functioning properly. In case heartbeat fails, which means the leader node is inactive for some arbitrary reason, one or more of the follower nodes may promote themselves to be candidate nodes (State 2). After a fair election, one of the candidate nodes is elected as the leader node, while the other candidate nodes return to State 1.

Referring again to Figure 2, in step 210, the collaborator node maty generate a public and private key pair, and in step 215 may share its public key with the other participant nodes in peer-to-peer network.

In step 220, the participant nodes in the peer-to-peer network may generate their public and private keys, and in step 225, each participant node may encrypt a message with the collaborator node's public key and send to the collaborator node. In one embodiment, the participant nodes may generate new public/private key pairs for each communication, which prevents the collaborator node from identifying an incoming message from a specific node. This dynamic message encryption-decryption thus provides anonymity for the participant nodes in the peer-to-peer network from message flow perspective.

In one embodiment, the message may be broadcast to nodes (i.e., all participant nodes and the leader node) in the peer-to-peer network. The leader node is the only node that can decrypt the message with its private key.

In one embodiment, the message may include parameters for a local machine learning model such as information related to model exchange, local weights, the local machine learning model itself, clear data, synthetic data, etc.

In one embodiment, the message may further include the participant node's public key. Thus, each participant node may encrypt the parameters and its public key with the collaborator node's public key.

In step 230, the collaborator node may receive the messages and decrypt the messages using its private key.

In step 235, the collaborator node may perform an operation on the received parameters, such as model aggregation, to create or update an aggregated machine learning model, etc. Notably, the collaborator node may include parameters and/or information for its local model in the operation.

In another embodiment, the collaborator node may train the aggregated machine learning model with data received from the participant nodes as well as its own data.

In step 240, the collaborator node may encrypt a message with each participant node's public key and broadcast the messages on the peer-to-peer network. In one embodiment, the message may include updates to the aggregated machine learning model.

In step 245, each participant node may decrypt the message from collaborator node, and may take any necessary actions with the contents of the message, such as updating its local machine learning model. Although the participant nodes receive all messages from the collaborator node, they can only decrypt the message encrypted with their public key.

The process may continue until a condition is reached, such as the local machine learning models have converged, etc.

The disclosure of Behera, Monik et al, (2021). "Federated Learning using Peer-to-peer Network for Decentralized Orchestration of Model Weights." TechRxiv. Preprint. (available at doi.org/10.36227/techrxiv.14267468.v1).

Hereinafter, general aspects of implementation of the systems and methods of embodiments will be described.

Embodiments of the system or portions of the system may be in the form of a "processing machine," such as a general-purpose computer, for example. As used herein, the term "processing machine" is to be understood to include at least one processor that uses at least one memory. The at least one memory stores a set of instructions. The instructions may be either permanently or temporarily stored in the memory or memories of the processing machine. The processor executes the instructions that are stored in the memory or memories in order to process data. The set of instructions may include various instructions that perform a particular task or tasks, such as those tasks described above. Such a set of instructions for performing a particular task may be characterized as a program, software program, or simply software.

In one embodiment, the processing machine may be a specialized processor.

In one embodiment, the processing machine may a cloud-based processing machine, a physical processing machine, or combinations thereof.

As noted above, the processing machine executes the instructions that are stored in the memory or memories to process data. This processing of data may be in response to commands by a user or users of the processing machine, in response to previous processing, in response to a request by another processing machine and/or any other input, for example.

As noted above, the processing machine used to implement embodiments may be a general-purpose computer. However, the processing machine described above may also utilize any of a wide variety of other technologies including a special purpose computer, a computer system including, for example, a microcomputer, mini-computer or mainframe, a programmed microprocessor, a micro-controller, a peripheral integrated circuit element, a CSIC (Customer Specific Integrated Circuit) or ASIC (Application Specific Integrated Circuit) or other integrated circuit, a logic circuit, a digital signal processor, a programmable logic device such as a FPGA, PLD, PLA or PAL, or any other device or arrangement of devices that is capable of implementing the steps of the processes disclosed herein.

The processing machine used to implement embodiments may utilize a suitable operating system.

It is appreciated that in order to practice the method of the embodiments as described above, it is not necessary that the processors and/or the memories of the processing machine be physically located in the same geographical place. That is, each of the processors and the memories used by the processing machine may be located in geographically distinct locations and connected so as to communicate in any suitable manner. Additionally, it is appreciated that each of the processor and/or the memory may be composed of different physical pieces of equipment. Accordingly, it is not necessary that the processor be one single piece of equipment in one location and that the memory be another single piece of equipment in another location. That is, it is contemplated that the processor may be two pieces of equipment in two different physical locations. The two distinct pieces of equipment may be connected in any suitable manner. Additionally, the memory may include two or more portions of memory in two or more physical locations.

To explain further, processing, as described above, is performed by various components and various memories. However, it is appreciated that the processing performed by two distinct components as described above, in accordance with a further embodiment, may be performed by a single component. Further, the processing performed by one distinct component as described above may be performed by two distinct components.

In a similar manner, the memory storage performed by two distinct memory portions as described above, in accordance with a further embodiment, may be performed by a single memory portion. Further, the memory storage performed by one distinct memory portion as described above may be performed by two memory portions.

Further, various technologies may be used to provide communication between the various processors and/or memories, as well as to allow the processors and/or the memories to communicate with any other entity; i.e., so as to obtain further instructions or to access and use remote memory stores, for example. Such technologies used to provide such communication might include a network, the Internet, Intranet, Extranet, LAN, an Ethernet, wireless communication via cell tower or satellite, or any client server system that provides communication, for example. Such communications technologies may use any suitable protocol such as TCP/IP, UDP, or OSI, for example.

As described above, a set of instructions may be used in the processing of embodiments. The set of instructions may be in the form of a program or software. The software may be in the form of system software or application software, for example. The software might also be in the form of a collection of separate programs, a program module within a larger program, or a portion of a program module, for example. The software used might also include modular programming in the form of object-oriented programming. The software tells the processing machine what to do with the data being processed.

Further, it is appreciated that the instructions or set of instructions used in the implementation and operation of embodiments may be in a suitable form such that the processing machine may read the instructions. For example, the instructions that form a program may be in the form of a suitable programming language, which is converted to machine language or object code to allow the processor or processors to read the instructions. That is, written lines of programming code or source code, in a particular programming language, are converted to machine language using a compiler, assembler or interpreter. The machine language is binary coded machine instructions that are specific to a particular type of processing machine, i.e., to a particular type of computer, for example. The computer understands the machine language.

Any suitable programming language may be used in accordance with the various embodiments. Further, it is not necessary that a single type of instruction or single programming language be utilized in conjunction with the operation of the system and method. Rather, any number of different programming languages may be utilized as is necessary and/or desired.

Also, the instructions and/or data used in the practice of embodiments may utilize any compression or encryption technique or algorithm, as may be desired. An encryption module might be used to encrypt data. Further, files or other data may be decrypted using a suitable decryption module, for example.

As described above, the embodiments may illustratively be embodied in the form of a processing machine, including a computer or computer system, for example, that includes at least one memory. It is to be appreciated that the set of instructions, i.e., the software for example, that enables the computer operating system to perform the operations described above may be contained on any of a wide variety of media or medium, as desired. Further, the data that is processed by the set of instructions might also be contained on any of a wide variety of media or medium. That is, the particular medium, i.e., the memory in the processing machine, utilized to hold the set of instructions and/or the data used in embodiments may take on any of a variety of physical forms or transmissions, for example. Illustratively, the medium may be in the form of paper, paper transparencies, a compact disk, a DVD, an integrated circuit, a hard disk, a floppy disk, an optical disk, a magnetic tape, a RAM, a ROM, a PROM, an EPROM, a wire, a cable, a fiber, a communications channel, a satellite transmission, a memory card, a SIM card, or other remote transmission, as well as any other medium or source of data that may be read by the processors.

Further, the memory or memories used in the processing machine that implements embodiments may be in any of a wide variety of forms to allow the memory to hold instructions, data, or other information, as is desired. Thus, the memory might be in the form of a database to hold data. The database might use any desired arrangement of files such as a flat file arrangement or a relational database arrangement, for example.

In the systems and methods, a variety of "user interfaces" may be utilized to allow a user to interface with the processing machine or machines that are used to implement embodiments. As used herein, a user interface includes any hardware, software, or combination of hardware and software used by the processing machine that allows a user to interact with the processing machine. A user interface may be in the form of a dialogue screen for example. A user interface may also include any of a mouse, touch screen, keyboard, keypad, voice reader, voice recognizer, dialogue screen, menu box, list, checkbox, toggle switch, a pushbutton or any other device that allows a user to receive information regarding the operation of the processing machine as it processes a set of instructions and/or provides the processing machine with information. Accordingly, the user interface is any device that provides communication between a user and a processing machine. The information provided by the user to the processing machine through the user interface may be in the form of a command, a selection of data, or some other input, for example.

As discussed above, a user interface is utilized by the processing machine that performs a set of instructions such that the processing machine processes data for a user. The user interface is typically used by the processing machine for interacting with a user either to convey information or receive information from the user. However, it should be appreciated that in accordance with some embodiments of the system and method, it is not necessary that a human user actually interact with a user interface used by the processing machine. Rather, it is also contemplated that the user interface might interact, i.e., convey and receive information, with another processing machine, rather than a human user. Accordingly, the other processing machine might be characterized as a user. Further, it is contemplated that a user interface utilized in the system and method may interact partially with another processing machine or processing machines, while also interacting partially with a human user.

It will be readily understood by those persons skilled in the art that embodiments are susceptible to broad utility and application. Many embodiments and adaptations of the present invention other than those herein described, as well as many variations, modifications and equivalent arrangements, will be apparent from or reasonably suggested by the foregoing description thereof, without departing from the substance or scope.

Accordingly, while embodiments present invention has been described here in detail in relation to its exemplary embodiments, it is to be understood that this disclosure is only illustrative and exemplary of the present invention and is made to provide an enabling disclosure of the invention. Accordingly, the foregoing disclosure is not intended to be construed or to limit the present invention or otherwise to exclude any other such embodiments, adaptations, variations, modifications or equivalent arrangements.

## Claims

1. A method for federated learning using peer-to-peer networks, comprising:
Electing (1), by a plurality of participant nodes (110) in a peer-to-peer network, one of the participant nodes (110) as a collaborator node using a consensus algorithm;
Generating (2), by the collaborator node, a collaborator node public key and a collaborator node private key;
Broadcasting (3), by the collaborator node and to the plurality of participant nodes (110), the collaborator node public key;
Generating (4), by each participant node (110), a participant node public key and a participant node private key, wherein each participant node (110) generates a new participant node public key and a new participant node private key for each communication with the collaborator node;
Encrypting (5), by each participant node, a message comprising a parameter for a local machine learning model for the participant node (110) and the participant node public key with the collaborator node public key;
Broadcasting (6), by each participant node, the encrypted message on the peer-to-peer network;
Decrypting (7), by the collaborator node, each of the encrypted messages with the collaborator node private key;
Updating (8), by the collaborator node, an aggregated machine learning model with the decrypted parameters for the local machine learning models;
Encrypting (9), by the collaborator node, a plurality of update messages each comprising an update from the aggregated machine learning model with each participant node's public key;
Broadcasting (10), by the collaborator node, the plurality of messages on the peer-to-peer network;
Decrypting (11), by each of the participant nodes, one of the plurality of messages with the participant node private key for the participant node; and
Updating (12), by each of the participant nodes, the local machine learning model for the participant node (110) with the update.

2. The method of claim 1, wherein the consensus algorithm is the Raft consensus algorithm.

3. The method of claim 1, wherein the parameter comprises information related to model exchange, local machine learning model weights, and/or the local machine learning model.

4. The method of claim 1, wherein the parameter comprises clear data and/or synthetic data, or wherein the collaborator node performs model aggregation using the decrypted parameters.

5. The method of claim 1, wherein the collaborator node trains the aggregated machine learning model using the decrypted parameters, or wherein the participant node (110) is the collaborator node for a limited period.

6. The method of claim 1, wherein the collaborator node broadcasts a heartbeat to the participant nodes (110).

7. The method of claim 1, wherein the participant nodes elect a new collaborator node in response to the collaborator node being inactive.

8. A system, comprising:
a plurality of participant nodes (110), each participant node associated with a local machine learning model; and
a peer-to-peer network connecting the plurality of participant nodes;
wherein:
the plurality of participant nodes (110) elect one of the plurality of participant nodes (110) as a collaborator node using a consensus algorithm;
the collaborator node generates a collaborator node public key and a collaborator node private key;
the collaborator node broadcasts the collaborator node public key to the plurality of participant nodes (110);
each participant node generates a participant node public key and a participant node private key, wherein each participant node generates a new participant node public key and a new participant node private key for each communication with the collaborator node;
each participant node (110) encrypts a message comprising a parameter for a local machine learning model for the participant node and the participant node public key with the collaborator node public key;
each participant node (110) broadcasts the encrypted message on the peer-to-peer network;
the collaborator node decrypts each of the encrypted messages with the collaborator node private key;
the collaborator node updates an aggregated machine learning model with the decrypted parameters for the local machine learning models;
the collaborator node encrypts a plurality of update messages each comprising an update from the aggregated machine learning model with each participant node's public key;
the collaborator node broadcasts the plurality of messages on the peer-to-peer network;
each of the participant nodes (110) decrypts one of the plurality of messages with its participant node private key for the participant node; and
each of the participant nodes (110) updates its local machine learning model with the update.

9. The system of claim 8, wherein the consensus algorithm is the Raft consensus algorithm.

10. The system of claim 8, wherein the parameter comprises information related to model exchange, local machine learning model weights, and/or the local machine learning model.

11. The system of claim 8, wherein the parameter comprises clear data and/or synthetic data.

12. The system of claim 8, wherein the collaborator node performs model aggregation using the decrypted parameters.

13. The system of claim 8, wherein the collaborator node trains the aggregated machine learning model using the decrypted parameters.

14. The system of claim 8, wherein the participant node (100) is the collaborator node for a limited period, or wherein the collaborator node broadcasts a heartbeat to the participant nodes (110).

15. The system of claim 8, wherein the participant nodes elect a new collaborator node in response to the collaborator node being inactive.

## Patentansprüche

1. Verfahren für föderiertes Lernen unter Verwendung von Peer-zu-Peer-Netzwerken, umfassend:
Auswählen (1), durch eine Vielzahl von Teilnehmerknoten (110) in einem Peer-zu-Peer-Netzwerk, einen der Teilnehmerknoten (110) als einen Kollaboratorknoten unter Verwendung eines Konsensalgorithmus;
Erzeugen (2), durch den Kollaboratorknoten, eines öffentlichen Schlüssels des Kollaboratorknotens und eines privaten Schlüssels des Kollaboratorknotens;
Rundsenden (3), durch den Kollaboratorknoten und an die Vielzahl von Teilnehmerknoten (110), des öffentlichen Schlüssels des Kollaboratorknotens;
Erzeugen (4), durch jeden Teilnehmerknoten (110), eines öffentlichen Schlüssels des Teilnehmerknotens und eines privaten Schlüssels des Teilnehmerknotens, wobei jeder Teilnehmerknoten (110) einen neuen öffentlichen Schlüssel des Teilnehmerknotens und einen neuen privaten Schlüssel des Teilnehmerknotens für jede Kommunikation mit dem Kollaboratorknoten erzeugt;
Verschlüsseln (5), durch jeden Teilnehmerknoten, einer Nachricht, die einen Parameter für ein lokales Maschinenlernen-Modell für den Teilnehmerknoten (110) und den öffentlichen Schlüssel des Teilnehmerknotens mit dem öffentlichen Schlüssel des Kollaboratorknotens umfasst;
Rundsenden (6), durch jeden Teilnehmerknoten, der verschlüsselten Nachricht in dem Peer-zu-Peer-Netzwerk;
Entschlüsseln (7), durch den Kollaboratorknoten, jede der verschlüsselten Nachrichten mit dem privaten Schlüssel des Kollaboratorknotens;
Aktualisieren (8), durch den Kollaboratorknoten, eines aggregierten Maschinenlernen-Modells mit den entschlüsselten Parametern für die lokalen Maschinenlernen-Modelle;
Verschlüsseln (9), durch den Kollaboratorknoten, einer Vielzahl von Aktualisierungsnachrichten, wobei jede eine Aktualisierung von dem aggregierten Maschinenlernen-Modell umfasst, mit dem öffentlichen Schlüssel jedes Teilnehmerknotens;
Rundsenden (10), durch den Kollaboratorknoten, der Vielzahl von Nachrichten in dem Peer-zu-Peer-Netzwerk;
Entschlüsseln (11), durch jeden der Teilnehmerknoten, einer der Vielzahl von Nachrichten mit dem privaten Schlüssel des Teilnehmerknotens für den Teilnehmerknoten; und
Aktualisieren (12), durch jeden der Teilnehmerknoten, des lokalen Maschinenlernen-Modells für den Teilnehmerknoten (110) mit der Aktualisierung.

2. Verfahren nach Anspruch 1, wobei der Konsensalgorithmus der Raft-Konsensalgorithmus ist.

3. Verfahren nach Anspruch 1, wobei der Parameter Informationen bezüglich Modellaustausch, Gewichten des lokalen Maschinenlernen-Modells und/oder des lokalen Maschinenlernen-Modells umfasst.

4. Verfahren nach Anspruch 1, wobei der Parameter klare Daten und/oder synthetische Daten umfasst oder wobei der Kollaboratorknoten Modellaggregation unter Verwendung der entschlüsselten Parameter durchführt.

5. Verfahren nach Anspruch 1, wobei der Kollaboratorknoten das aggregierte Maschinenlernen-Modell unter Verwendung der entschlüsselten Parameter trainiert oder wobei der Teilnehmerknoten (110) für eine begrenzte Zeitdauer der Kollaboratorknoten ist.

6. Verfahren nach Anspruch 1, wobei der Kollaboratorknoten einen Herzschlag an die Teilnehmerknoten (110) rundsendet.

7. Verfahren nach Anspruch 1, wobei die Teilnehmerknoten als Reaktion darauf, dass der Kollaboratorknoten inaktiv ist, einen neuen Kollaboratorknoten auswählen.

8. System, umfassend:
eine Vielzahl von Teilnehmerknoten (110), wobei jeder Teilnehmerknoten mit einem lokalen Maschinenlernen-Modell assoziiert ist; und
ein Peer-zu-Peer-Netzwerk, das die Vielzahl von Teilnehmerknoten verbindet; wobei:
die Vielzahl von Teilnehmerknoten (110) einen der Vielzahl von Teilnehmerknoten (110) als einen Kollaboratorknoten unter Verwendung eines Konsensalgorithmus auswählt;
der Kollaboratorknoten einen öffentlichen Schlüssel des Kollaboratorknotens und einen privaten Schlüssel des Kollaboratorknotens erzeugt;
der Kollaboratorknoten den öffentlichen Schlüssel des Kollaboratorknotens an die Vielzahl von Teilnehmerknoten (110) rundsendet;
jeder Teilnehmerknoten einen öffentlichen Schlüssel des Teilnehmerknotens und einen privaten Schlüssel des Teilnehmerknotens erzeugt, wobei jeder Teilnehmerknoten einen neuen öffentlichen Schlüssel des Teilnehmerknotens und einen neuen privaten Schlüssel des Teilnehmerknotens für jede Kommunikation mit dem Kollaboratorknoten erzeugt;
jeder Teilnehmerknoten (110) eine Nachricht verschlüsselt, die einen Parameter für ein lokales Maschinenlernen-Modell für den Teilnehmerknoten und den öffentlichen Schlüssel des Teilnehmerknotens mit dem öffentlichen Schlüssel des Kollaboratorknotens umfasst;
jeder Teilnehmerknoten (110) die verschlüsselte Nachricht in dem Peer-zu-Peer-Netzwerk rundsendet;
der Kollaboratorknoten jede der verschlüsselten Nachrichten mit dem privaten Schlüssel des Kollaboratorknotens entschlüsselt;
der Kollaboratorknoten ein aggregiertes Maschinenlernen-Modell mit den entschlüsselten Parametern für die lokalen Maschinenlernen-Modelle aktualisiert;
der Kollaboratorknoten eine Vielzahl von Aktualisierungsnachrichten, wobei jede eine Aktualisierung von dem aggregierten Maschinenlernen-Modell umfasst, mit dem öffentlichen Schlüssel jedes Teilnehmerknotens verschlüsselt;
der Kollaboratorknoten die Vielzahl von Nachrichten in dem Peer-zu-Peer-Netzwerk rundsendet;
jeder der Teilnehmerknoten (110) eine der Vielzahl von Nachrichten mit seinem privaten Schlüssel des Teilnehmerknotens für die Teilnehmerknoten entschlüsselt; und
jeder der Teilnehmerknoten (110) sein lokales Maschinenlernen-Modell mit der Aktualisierung aktualisiert.

9. System nach Anspruch 8, wobei der Konsensalgorithmus der Raft-Konsensalgorithmus ist.

10. System nach Anspruch 8, wobei der Parameter Informationen bezüglich Modellaustausch, Gewichten des lokalen Maschinenlernen-Modells und/oder des lokalen Maschinenlernen-Modells umfasst.

11. System nach Anspruch 8, wobei der Parameter klare Daten und/oder synthetische Daten umfasst.

12. System nach Anspruch 8, wobei der Kollaboratorknoten Modellaggregation unter Verwendung der entschlüsselten Parameter durchführt.

13. System nach Anspruch 8, wobei der Kollaboratorknoten das aggregierte Maschinenlernen-Modell unter Verwendung der entschlüsselten Parameter trainiert.

14. System nach Anspruch 8, wobei der Teilnehmerknoten (100) für eine begrenzte Zeitdauer der Kollaboratorknoten ist oder wobei der Kollaboratorknoten einen Herzschlag an die Teilnehmerknoten (110) rundsendet.

15. System nach Anspruch 8, wobei die Teilnehmerknoten als Reaktion darauf, dass der Kollaboratorknoten inaktiv ist, einen neuen Kollaboratorknoten auswählen.

## Revendications

1. Procédé d'apprentissage fédéré utilisant des réseaux pair-à-pair, le procédé comprenant les étapes suivantes :
élire (1), par une pluralité de nœuds participants (110) dans un réseau pair-à-pair, l'un des nœuds participants (110) en tant que nœud collaborateur à l'aide d'un algorithme de consensus ;
générer (2), par le nœud collaborateur, une clé publique de nœud collaborateur et une clé privée de nœud collaborateur ;
diffuser (3), par le nœud collaborateur et à la pluralité de nœuds participants (110), la clé publique du nœud collaborateur ;
générer (4), par chaque nœud participant (110), une clé publique de nœud participant et une clé privée de nœud participant, chaque nœud participant (110) générant une nouvelle clé publique de nœud participant et une nouvelle clé privée de nœud participant pour chaque communication avec le nœud collaborateur ;
crypter (5), par chaque nœud participant, un message comprenant un paramètre pour un modèle local d'apprentissage automatique pour le nœud participant (110) et la clé publique du nœud participant avec la clé publique du nœud collaborateur ;
diffuser (6), par chaque nœud participant, le message crypté sur le réseau pair-à-pair ;
décrypter (7), par le nœud collaborateur, chacun des messages cryptés à l'aide de la clé privée du nœud collaborateur ;
mettre à jour (8), par le nœud collaborateur, un modèle d'apprentissage automatique agrégé avec les paramètres décryptés pour les modèles d'apprentissage automatique locaux ;
crypter (9), par le nœud collaborateur, une pluralité de messages de mise à jour comprenant chacun une mise à jour du modèle d'apprentissage automatique agrégé avec la clé publique de chaque nœud participant ;
diffuser (10), par le nœud collaborateur, la pluralité de messages sur le réseau pair-à-pair ;
décrypter (11), par chacun des nœuds participants, un de la pluralité de messages avec la clé privée du nœud participant pour le nœud participant ; et
mettre à jour (12), par chacun des nœuds participants, le modèle local d'apprentissage automatique pour le nœud participant (110) à l'aide de la mise à jour.

2. Procédé selon la revendication 1, dans lequel l'algorithme de consensus est l'algorithme de consensus Raft.

3. Procédé selon la revendication 1, dans lequel le paramètre comprend des informations relatives à l'échange de modèles, aux poids des modèles d'apprentissage automatique locaux, et/ou aux modèles d'apprentissage automatique locaux.

4. Procédé selon la revendication 1, dans lequel le paramètre comprend des données claires et/ou des données synthétiques, ou dans lequel le nœud collaborateur effectue une agrégation de modèles à l'aide des paramètres décryptés.

5. Procédé selon la revendication 1, dans lequel le nœud collaborateur entraîne le modèle d'apprentissage automatique agrégé à l'aide des paramètres décryptés, ou dans lequel le nœud participant (110) est le nœud collaborateur pour une période limitée.

6. Procédé selon la revendication 1, dans lequel le nœud collaborateur diffuse un signal de type battement de cœur aux nœuds participants (110).

7. Procédé selon la revendication 1, dans lequel les nœuds participants élisent un nouveau nœud collaborateur en réponse à l'inactivité du nœud collaborateur.

8. Système comprenant :
une pluralité de nœuds participants (110), chaque nœud participant étant associé à un modèle local d'apprentissage automatique ; et
un réseau pair-à-pair reliant la pluralité de nœuds participants ;
où :
la pluralité de nœuds participants (110) élit l'un de la pluralité de nœuds participants (110) comme nœud collaborateur à l'aide d'un algorithme de consensus ;
le nœud collaborateur génère une clé publique de nœud collaborateur et une clé privée de nœud collaborateur ;
le nœud collaborateur diffuse la clé publique du nœud collaborateur à la pluralité de nœuds participants (110) ;
chaque nœud participant génère une clé publique de nœud participant et une clé privée de nœud participant, chaque nœud participant générant une nouvelle clé publique de nœud participant et une nouvelle clé privée de nœud participant pour chaque communication avec le nœud collaborateur ;
chaque nœud participant (110) crypte un message comprenant un paramètre pour un modèle local d'apprentissage automatique pour le nœud participant et la clé publique du nœud participant avec la clé publique du nœud collaborateur ;
chaque nœud participant (110) diffuse le message crypté sur le réseau pair-à-pair ;
le nœud collaborateur décrypte chacun des messages cryptés à l'aide de la clé privée du nœud collaborateur ;
le nœud collaborateur met à jour un modèle d'apprentissage automatique agrégé avec les paramètres décryptés pour les modèles d'apprentissage automatique locaux ;
le nœud collaborateur crypte une pluralité de messages de mise à jour comprenant chacun une mise à jour du modèle d'apprentissage automatique agrégé avec la clé publique de chaque nœud participant ;
le nœud collaborateur diffuse la pluralité de messages sur le réseau pair-à-pair ;
chacun des nœuds participants (110) décrypte l'un de la pluralité de messages avec sa clé privée de nœud participant pour le nœud participant ; et
chacun des nœuds participants (110) met à jour son modèle local d'apprentissage automatique à l'aide de la mise à jour.

9. Système selon la revendication 8, dans lequel l'algorithme de consensus est l'algorithme de consensus Raft.

10. Système selon la revendication 8, dans lequel le paramètre comprend des informations relatives à l'échange de modèles, aux poids des modèles d'apprentissage automatique locaux, et/ou aux modèles d'apprentissage automatique locaux.

11. Système selon la revendication 8, dans lequel le paramètre comprend des données claires et/ou des données synthétiques.

12. Système selon la revendication 8, dans lequel le nœud collaborateur effectue l'agrégation de modèles à l'aide des paramètres décryptés.

13. Système selon la revendication 8, dans lequel le nœud collaborateur entraîne le modèle d'apprentissage automatique agrégé à l'aide des paramètres décryptés.

14. Système selon la revendication 8, dans lequel le nœud participant (100) est le nœud collaborateur pour une période limitée, ou dans lequel le nœud collaborateur diffuse un signal de type battement de cœur aux nœuds participants (110).

15. Système selon la revendication 8, dans lequel les nœuds participants élisent un nouveau nœud collaborateur en réponse à l'inactivité du nœud collaborateur.
